# EUROPÄISCHE PATENTSCHRIFT

(11) **EP 1 561 656 B1**
(45) Veröffentlichungstag und Bekanntmachung des Hinweises auf die Patenterteilung: **30.11.2011**
(21) Anmeldenummer: 05100354.9
(22) Anmeldetag: 20.01.2005
(51) Int. Cl.: B60S 1/38, B29C 47/02

(54) **Wischerblatt und Verfahren zu seiner Herstellung**
Wiper blade and a method for the manufacturing thereof
Balai d'essuie-glace et méthode pour sa fabrication

(30) Priorität: 09.02.2004 DE 102004006194; 07.01.2005 DE 102005000851
(43) Veröffentlichungstag der Anmeldung: 10.08.2005
(73) Patentinhaber: ROBERT BOSCH GMBH, 70442 Stuttgart (DE)
(72) Erfinder: Schmid, Hellmut, 74343, Sachsenheim (DE); Kraatz, Ullrich, 71229, Leonberg (DE); Gruhn, Herbert, 71638, Ludwigsburg (DE); Wilms, Christian, 3582, Koersel-Beringen (BE); Verelst, Hubert, 3300, Tienen (BE); Winter, Dominik, 67061, Ludwigshafen (DE); Van De Rostyne, Kris, 3000, Leuven (BE); Vranken, Curt, 3440, Zoutleeuw (BE)

(56) Entgegenhaltungen:
- EP-A- 1 059 213
- WO-A-01/85482
- WO-A-82/01735
- WO-A-98/10965
- WO-A-02/094624
- DE-A1- 3 435 469
- DE-A1- 10 130 939
- DE-A1- 10 226 752
- DE-C1- 10 224 966
- US-A- 6 110 546

## Beschreibung

Die Erfindung betrifft ein Wischerblatt für einen Scheibenwischer und ein Verfahren zu seiner Herstellung nach dem Oberbegriff der unabhängigen Ansprüche.

### Stand der Technik

Üblicherweise werden heute die zum Wischblatt gehörenden Wischleisten oder Wischgummis, welche beispielsweise zur Entfernung von Wassertropfen auf der Windschutzscheibe von Kraftfahrzeugen dienen und an den vor der Windschutzscheibe hin- und herbewegbaren Scheibenwischern einer Scheibenwischanlage befestigt werden, spritzgegossen oder endlos extrudiert. Dabei wird ein zuvor zusammengemischtes und unvulkanisiertes Gummiausgangsmaterial, bspw. ein unvulkanisierter synthetischer Kautschuk, geformt und vulkanisiert. Aus wirtschaftlichen Gründen hat sich bei beiden Verfahren die gleichzeitige Herstellung von Doppelprofilen durchgesetzt. Nach Abschluss der Vulkanisation wird die Oberfläche der so erhaltenen Gummiwischleiste üblicherweise nachbehandelt, um den Reibungswiderstand an der zu wischenden Scheibe entsprechend den Erfordernissen zu vermindern bzw. das Gleitvermögen der Wischgummileiste auf der zu wischenden Scheibe zu verbessern. Der anzustrebende Reibwert µ darf bei einer Temperatur t von 23° ± 5°C und einer relativen Luftfeuchte von 50 ± 3% den Wert von 2,0 nicht übersteigen. Die genannte Oberflächennachbehandlung besteht beispielsweise in einem Härten der Oberfläche der Wischgummileiste durch Chlorierung, Bromierung oder in einer Beschichtung derselben, um auf der Wischleiste eine Oberflächenschicht zu erzielen, welche ein feines, schmierendes Pulver, beispielsweise pulverförmiges Molybdändisulfid enthält. Wenn auch das Chlorieren den Reibungswiderstand herabsetzt und das Gleitvermögen verbessert, so reicht die erzielte Verbesserung für einen einwandfreien Lauf des Wischers nicht aus. Das Aufbringen einer trockenschmierstoffhaltigen Oberflächenschicht ist mit dem Nachteil verbunden, dass dieselbe bereits nach kurzer Gebrauchsdauer der Wischleiste abgeschabt wird, ihr also die nötige Standfestigkeit fehlt.

Die DE 197 41 225 A1 offenbart ein Wischerblatt, das einen aus einem Elastomermaterial hergestellten Körper und eine Oberflächen-Beschichtungsschicht umfasst, die auf einer Oberfläche des Körpers angeordnet ist und ein reaktive Gruppen enthaltendes fluorhaltiges Harz sowie ein Härtungsmittel beinhaltet, das Reaktivität mit den reaktiven Gruppen zeigt.

In der DE 101 25 045 A1 wird ein Wischerblatt für einen Scheibenwischer, insbesondere für einen Scheibenwischer eines Kraftfahrzeuges vorgeschlagen, das einen Wischgummi mit einer Wischgummilippe aufweist. Um einen niedrigen Trockenreibwert zu erreichen, ist die Wischgummilippe teilweise aus Polyethylen gefertigt. Die Herstellung der Wischgummilippe erfolgt durch Vulkanisieren eines Gummimaterials zusammen mit Polyethylen.

Ein gattungsgemäßes Wischblatt sowie ein gattungsgemäßes Verfahren zur Herstellung eines Wischblatts sind aus dem Dokument DE-A-10 130 939 bekannt.

Aufgabe der vorliegenden Erfindung ist es daher, eine einfache und umweltfreundliche Lösung für die oben genannten Probleme des Standes der Technik zur Verfügung zu stellen und ein Wischerblatt mit hervorragender Wischleistung und gleichzeitiger langer Lebensdauer bereitzustellen.

### Vorteile der Erfmdung

Mit der vorliegenden Erfindung wird eine Produktverbesserung sowohl hinsichtlich der Erhöhung der Verschleißbeständigkeit unter Beibehaltung der hervorragenden Wischqualität über die Lebensdauer des Wischers als auch durch eine Reibwertreduzierung auf einen Wert von µ < 0,8 erzielt. Durch eine Reduzierung der Gesamtzahl der Fertigungsschritte sowie durch den Einsatz ausschließlich Inline-fähiger Prozessschritte wird eine deutliche Vereinfachung des Gesamtprozesses erreicht.

Das erfindungsgemäße Verfahren zur Herstellung des Wischerblatts hat gegenüber dem Stand der Technik den weiteren Vorteil, dass bei der Oberflächenbehandlung des Wischgummis kein freies Chlor oder Brom entsteht, da keine Halogenierung der Wischgummis erforderlich ist.

Ebenfalls vorteilhaft ist, dass die Haltbarkeit und die Reibwertreduzierung deutlich höher ist als bei Beschichtungen, wie sie aus dem Stand der Technik bekannt sind. Weiterhin ist vorteilhaft, dass keine Verschmutzung durch Ablösung (Abrieb) der Oberflächenschicht entsteht.

Ein weiterer Vorteil liegt darin, dass die direkten und indirekten Kosten der Oberflächenbehandlung stark reduziert werden können, da auf eine Halogenierung der Oberfläche des herzustellenden Wischgummis verzichtet werden kann.

Vorteilhafte Weiterbildungen der Erfmdung ergeben sich aus den in den Unteransprüchen genannten Maßnahmen.

### Ausführungsbeispiele

Kern der Erfmdung ist der Einsatz von Folien zur Oberflächenbeschichtung von Wischgummis. Geeignete Materialien werden dabei im Rahmen des Produktionsprozesses zur Herstellung der Wischgummis aufgebracht. Mit dieser Technik sind verbesserte Produkteigenschaften aufgrund der bestehenden Materialvielfalt bei Folien einfach zu realisieren.

Es ist anzumerken, dass die vorliegende Erfindung nicht ausschließlich auf Wischgummis von Wischerblättern für Scheibenwischer anwendbar ist, sondern in gleicher Weise auch für Tür- oder Fensterdichtungen, insbesondere für Türen und Fenster von Kraftfahrzeugen verwendet werden kann. Im folgenden soll der Einfachheit halber jedoch lediglich der Einsatz bei Wischgummis beschrieben werden.

Bevorzugtes Material für Folien zur Beschichtung von Wischgummis ist High Molecular Weight Polyethylene oder Ultra High Molecular Weight Polyethylene (HMW-PE, UHMW-PE), da dieses besonders verschleißfest ist und eine ausreichend wasserabweisende Funktion besitzt. Es sind jedoch auch andere Materialien wie bspw. Polyethylen (PE), fluoriertes Ethylen-Propylene (FEP), Polyphenylen-Ether (PPE), Perfluoralkoxy-Polymere (PFA), Polycarbonat (PC), Polyoxymethylen (POM), Polyacrylat (PA), Polyurethan (PUR), Polytetrafluorethylen (PTFE) oder ein Laminat aus verschiedenen dünnen Schichten dieser Materialien sowie Granulatmischungen verwendbar. Die Korngröße des verwendeten Granulats liegt vorzugsweise unterhalb von 100 µm. Eine Verwendung von größeren Körnern kann u. U. zu einer verminderten Wischqualität führen.

Das bevorzugte zu beschichtende Gummimaterial der Wischgummis ist Ethylen-Propylen-Dien-Monomer (EPDM), aber auch Ethylen-Propylen-Monomer (EPM), Chloroprenkautschuk (CR), Naturkautschuk (NR) und Mischungen derselben sind verwendbar.

Bei der Verwendung von reibmindernden Folien als Beschichtungen auf der Oberfläche der Wischgummilippe eines Wischgummis wird die Folie in der Mitte des in Form eines Doppelprofils Wischgummistrangs angebracht. Das Aufbringen wird dabei erfindungsgemäß mittels eines Klebers durchgeführt werden, in Form einer selbstklebenden Folie.

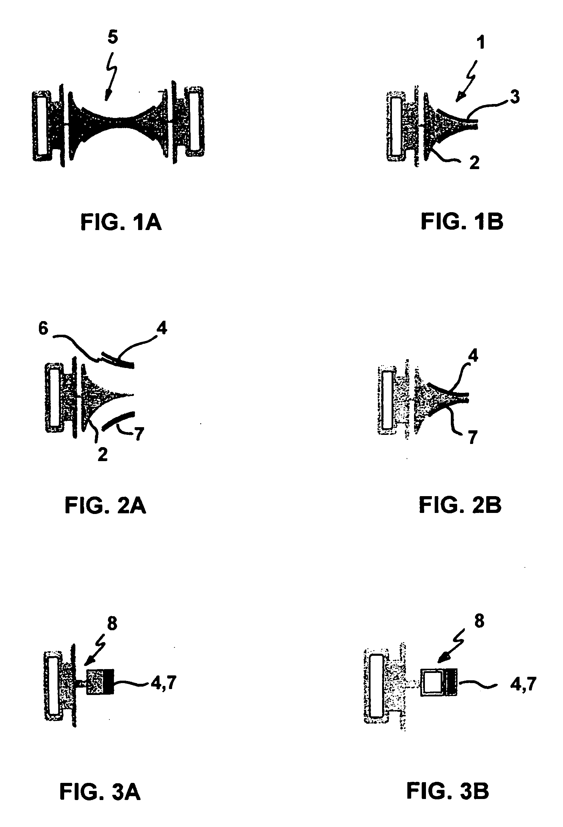

Wie bereits erwähnt hat sich bei den bisherigen Verfahren zur Herstellung von Wischerblättern vor allem aus wirtschaftlichen Gründen die gleichzeitige Herstellung von Doppelprofilen durchgesetzt. Dabei werden Wischerblätter mit zweckentsprechenden Profilen (oder Querschnitten) in der Regel kontinuierlich aus vulkanisierbaren Polymermischungen extrudiert, vulkanisiert und anschließend vereinzelt. Fig. 1A zeigt ein solches Doppelprofil 5, und Fig. 1B ein Einzelprofil 1 nach dem Schneiden des Doppelprofils 5 aus Fig. 1A.

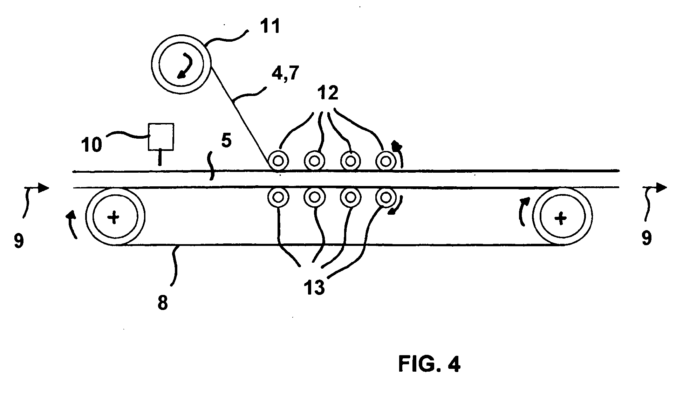

Erfindungsgemäß wird nun nach dem Vulkanisieren und einem evtl. Reinigungsschritt ein Folienstreifen 4, bspw. aus PE oder PA, auf beiden Seiten der Oberfläche der Wischgummilippe 3 aufgebracht. Dies kann bspw. mittels eines geeigneten Klebstoffes 6, bspw. eines Hot Melt-Klebstoffes geschehen oder wird erfindungsgemäß eine selbstklebende Folie 7 aufgebracht. In Figur 4 ist der Arbeitsablauf schematisch dargestellt. Die extrudierten, vulkanisierten und gereinigten Doppelprofile 5 werden mittels eines Transportbandes 8 in Pfeilrichtung 9 bewegt und dabei im Falle von mit Klebstoff 6 aufgebrachten Folien 4 an einer Klebstoffdosierungseinrichtung 10 vorbeigeführt, an der der Klebstoff auf die Oberfläche der Wischgummilippe appliziert wird. Von einer Rolle 11, auf der die Folienstreifen 4 aufgewickelt sind, wird die Folie anschließend dem Doppelprofilstrang zugeführt und mit Hilfe von Anpressrollen 12 und entsprechenden Gegenrollen 13 mit dem Strang verpresst. Der mit der Folie versehene Strang wird anschließend zur Beklebung der zweiten Seite weitergeführt und danach auf eine vorbestimmte Länge geschnitten. Im Falle der Verwendung von selbstklebender Folie 7 kann die Klebstoffdosiereinrichtung 10 entfallen und die Rolle 11 enthält die selbstklebende Folie 7. Aufgrund wirtschaftlicher Vorteile (lediglich ein Arbeitsgang) bietet sich ein Aufbringen auf die noch nicht geschnittenen Doppelprofile 5 an (vgl. Fig. 1A), aber auch bereits geschnittene Einzelprofile können, wie in Fig. 2A gezeigt, beklebt werden. Die Fig. 2B zeigt ein Einzelprofil mit fertig aufgeklebten Folienstreifen 4 bzw. 7. Die Folienstreifen haben vorzugsweise eine Dicke im Bereich von 15 bis 300 µm.

Dieses Verfahren hat den Vorteil, dass nicht in bestehende, bekannte Prozessschritte eingegriffen werden muss. Außerdem kann der Wischgummistrang gegenüber abgelängten Wischgummis während der Applikation einfach gehandhabt werden.

Die Klebefolie kann auf bereits bekannte Gummiprofile aufgebracht werden, es ist jedoch aufgrund der einfachen Handhabung möglich, alle denkbaren Profile zu bekleben, so dass dieses Verfahren universell anwendbar ist. Die Fign. 3A und 3B zeigen das Aufbringen der Klebefolie 4, 7 auf ein beliebiges Profil 8. Der Vorteil des hier gezeigten Profils liegt darin, dass lediglich ein Klebestreifen anstelle von zwei wie bei herkömmlichen Profilen notwendig ist.

In einer nicht beansprüchten Ausführungsform kann die Folie auch vor dem eigentlichen Vulkanisationsschritt aufgebracht werden. Durch Beaufschlagen des Wischgummis mit Wärme wird die Folie dabei auf das Gummi aufvulkanisiert bzw. geschmolzen. Dies kann auf verschiedene Art und Weise geschehen. Eine Möglichkeit ist das Auftragen im Extruderkopf am Ende der Düse. Auf diese Weise wird die Folie durch die Strömung des Extrudats mittransportiert. Durch den Druck innerhalb der Düse haftet die Folie sehr gut an dem noch nicht vulkanisierten Extrudat. Dies ist deshalb wichtig, weil die Folie beim Vulkanisieren bzw. Schmelzen gut an dem Gummi anliegen muss, damit eine gleichbleibende Haftung nach der Vulkanisation gewährleistet ist. Diese Lösung ist die kostengünstigste, da keine weiteren Änderungen im bestehenden Prozess notwendig sind. Weitere Vorteile dieser Lösung sind die stabilen Klebebedingungen unmittelbar nach der Düse. Es muss jedoch darauf geachtet werden, dass die Folie beim Einführen in die Düse nicht beschädigt wird.

Eine weitere Möglichkeit besteht im Auftragen außerhalb der Düse mit Hilfe von Schienen, Andruckrollen oder dgl. Im Falle von noch nicht vulkanisiertem Gummi ist es notwendig, die beiden Andrucksysteme mit einer Einstellung zur genauen Variation der Höhe auszustatten, um eine vorbestimmte Dicke über die Länge des Strangs gewährleisten zu können, da noch nicht vulkanisierter Gummi eine geringere Stabilität aufweist. Der noch nicht vulkanisierte Gummi wird zwischen diesen Andruckstellen hindurchgeführt, wobei die Folie aufgetragen wird. Wichtig ist dabei, dass die Geometrie des Profils durch den Andruckmechanismus nicht gestört wird.

In einer weiteren Ausführungsform der vorliegenden Erfindung wird die Folie, wie im vorangehenden Abschnitt beschrieben, auf einen semivulkanisierten Gummi aufgetragen. Semivulkanisiert bedeutet, dass der Gummi nach einer bestimmten Vulkanisierzeit aus dem Salzbad bzw. Ofen genommen wird und daher nur teilweise vulkanisiert ist. Dies hat den Vorteil, dass der Gummi nicht mehr so zerbrechlich ist wie ein unvulkanisierter Gummi. Wird ein Salzbad zur Vulkanisation verwendet, muss sichergestellt sein, dass die Oberfläche gereinigt und getrocknet wird, um eine gute Haftung der Folie zu gewährleisten. Es ist weiterhin empfehlenswert, den Gummi vor dem Aufbringen der Folie zu erwärmen, um konstante Klebebedingungen zu erreichen, die jedoch in diesem Fall nicht mehr so gut sind wie bei Verwendung eines nicht vulkanisierten Gummis. Es besteht somit bei dieser Ausführungsform die Gefahr einer nicht stabilen Haftung.

Das Auftragen der Folie auf die auf Länge geschnittenen Gummis mit Hilfe einer Schablone ist ebenfalls möglich. Dabei wird die Schablone erhitzt, wobei sie die Folie auf das Gummi aufvulkanisiert bzw. aufschmilzt. Hierzu ist eine große Anlage erforderlich, wobei eine Reihe von Schablonen die Gummis transportiert.

Beim Anbringen der Folie auf vollständig vulkanisiertem Gummi muss die Folie mit Hilfe von Wärme angebracht werden. Die Klebekraft ist in diesem Fall nicht mehr ausreichend, um die Folie einwandfrei haften zu lassen. Mit Hilfe eines Andrucksystems wird dabei die Folie auf den Gummi aufvulkanisiert bzw. aufgeschmolzen. Eine Störung der Geometrie ist dabei ausgeschlossen, wenn eine größere Andruckkraft verwendet wird. Nachteilig kann in diesem Fall sein, dass für das Andrücken und Aufschmelzen zusätzliche Vorrichtungen benötigt werden.

Wie bereits erwähnt, kann die Erhöhung der Verschleißbeständigkeit unter Beibehaltung der hervorragenden Wischqualität über die Lebensdauer des Wischers und die Reibwertreduzierung auf einen Wert von µ < 0,6 auch durch das Aufbringen eines Granulats auf das Wischgummi erreicht werden. Dabei wird eine bestimmte Menge des Granulats mit Hilfe von herkömmlichen Prozessen auf das Gummi aufgebracht, bspw. mit Hilfe eines Dosierrads. Durch ein gezahntes Rad wird das Granulat dosiert und mit rotierenden Bürsten auf das Gummi geschleudert. Eine andere Möglichkeit ist die Verwendung des Pulverlackverfahrens. Hierbei wird das Granulat mittels einer Düse und Pressluft auf das Gummi aufgetragen. Durch die gute Klebekraft des Gummis ist eine elektrostatische Aufladung des Gummis bzw. Granulats nicht notwendig. Auch eine Auftragung mittels Wirbelsintern ist möglich. Dabei wird das Granulat in einem Wirbelbad aufgetragen. Dabei ist es wichtig, darauf zu achten, dass das Pulver bzw. Granulat im Wirbeltank nicht durch Fremdstoffe kontaminiert wird, wodurch ein Zusammenkleben des Granulats unter Ausbildung von Partikeln auftreten kann, die das Wischbild beeinträchtigen können. Schließlich kann das Granulat auch durch Aufsprühen aus einer Suspension auf das Gummi aufgebracht werden. Durch die Klebeeigenschaften des reinem Gummis bleibt das Granulat an der Oberfläche haften.

Beim Auftragen des Granulats ist es wichtig, eine konstante Pulverdichte zu erhalten, um über die gesamte Gummilänge eine stabile Reibung zu erhalten. Dabei kann es notwendig werden, das Granulat zunächst im Überschuss aufzutragen und anschließend den Überschuss kontrolliert durch Abblasen mittels Pressluft oder mit Hilfe eines Absaugsystems wieder zu entfernen. Dabei bestimmt die Klebekraft des Gummis die Pulverdichte, da nur soviel Pulver aufgenommen wird, wie die Klebekraft des Gummis vorgibt. Falls notwendig kann ein Primer benutzt werden, der die anfängliche klebende Wirkung übernimmt. Anschließend kann dieser Primer beim Vulkanisieren verdunsten. Dieses Verfahren ist vor allem bei Verwendung schon geschnittener Profile einsetzbar.

Wahlweise kann das gesamte Gummiprofil mit dem Granulat beschichtet werden oder nur das Gebiet im Bereich der Wischlippe. Ein Vorteil bei der Beschichtung des gesamten Gummiprofils ist z.B. eine bessere Handhabung während das Schneideprozesses.

Nach dem Auftragen des Granulats wird dann in einem Folgeschritt das Granulat durch Zufuhr von Wärme, bspw. durch ein Salzbad, einen Ofen, mittels einer IR-Heizung oder dgl., auf das Gummi aufvulkanisiert. Dabei wird es teilweise auch geschmolzen.

Es ist möglich, das Granulat unmittelbar nach der Extrusion auf kontinuierliche Gummistränge aufzutragen. Dabei wird das Granulat vorzugsweise vor dem Vulkanisieren aufgetragen, so dass bei der Vulkanisation auch das Granulat auf das Gummi aufvulkanisiert wird. Dies ist die kostengünstigste Lösung, da keine weiteren Änderungen im bekannten Prozess notwendig sind. Weitere Vorteile dieser Vorgehensweise sind die stabilen Klebebedingungen unmittelbar nach der Düse, da das Gummi nicht verschmutzt ist und sich die hohe Temperatur günstig auf die Haftung beim Auftragen des Granulats auswirkt. Es ist jedoch darauf zu achten, dass während des Auftragens keine Kräfte auftreten, die die Geometrie des Gummis beeinflussen können, da der Gummistrang nach der Vulkanisation sehr empfindlich gegen Verformung ist. Bei dieser Verfahrensvariante ist es von besonderem Vorteil, wenn der extrudierte Gummistrang bzw. das aufzutragende Granulat vor dem Auftrag beispielsweise durch eine elektrische Kontaktierung elektrostatisch aufgeladen wird. Dies verbessert die Haftung des Granulats auf der Oberfläche des noch unvulkanisierten Gummistrangs.

Eine nachfolgende Vulkanisation kann beispielsweise in einem entsprechend temperierten Salzbad erfolgen. Dabei ergibt sich eine borstenartig strukturierte Oberfläche des vulkanisierten Gummistranges, die für die Anwendung als Wischgummi in der Regel geeignet ist, sich aber noch durch eine Nachglättung beispielsweise durch eine geeignete Hitzebehandlung verbessern lässt.

Eine weitere Möglichkeit besteht in einer Vulkanisation an Luft beispielsweise durch Einwirkung von Heißluft oder Wärmestrahlung. Dabei zerfließen die aufgetragenen Granulatpartikel und bilden ohne Nachbehandlung bereits eine ausreichend glatte Oberfläche.

In einem weiteren, nicht beanspruchten Ausführungsbeispiel ist es vorgesehen daß, das Auftragen des Granulats nach der Vulkanisation und das Verschmelzen mit dem Gummi durch einen zusätzlichen Post-Vulkanisierungsschritt stellfindet. Bei diesem Verfahren kann sowohl ein semi- als auch ein voll vulkanisierter Gummi verwendet werden. Es ist dabei jedoch notwendig, den Gummi in einem zusätzlichen Prozessschritt zu reinigen, vor allem dann, wenn zur Vulkanisation ein Salzbad verwendet wird. Alle Salzreste müssen entfernt werden, da diese einerseits das Aufvulkanisieren verhindern können und andererseits die Klebeeigenschaften negativ beeinflussen.

Es kann auch notwendig werden, die Gummioberfläche vor dem Auftragen leicht zu erwärmen, um eine stabile, kontinuierliche Klebekraft zu erhalten. Bei dieser Ausführungsform ist es vorteilhaft, dass der Gummi schon geometrisch stabil ist, d.h., dass dabei größere Kräfte auf den Gummi einwirken können, ohne ihn zu deformieren oder gar zu zerstören.

Es ist dabei auch möglich, das Gummiprofil vertikal statt horizontal durch die Apparatur laufen zu lassen, was die gleichmäßige Austragung begünstigt, da der Einfluss der Gravitation für beide Beschichtungsseiten gleich ist. Bei Anwendung eines Postvulkanisierungsschrittes mit voll vulkanisiertem Gummi kann der Auftragungsprozess auch unmittelbar vor dem Schneidprozess des Gummis durchgeführt werden. In diesem Fall werden schon auf Länge geschnittene Doppelprofile verwendet. Auf diese Weise wird das Auftragungsverfahren vom Extrudierprozess entkoppelt, wobei Ausfälle beim Auftragen des Granulats den Extrusionsprozess nicht beeinflussen. Zu beachten ist, dass in diesem Fall das Transportsystem den Gummi mit sehr hoher Reibung verarbeiten muss.

Der Schritt des Postvulkanisierens kann auf verschiedene Art und Weise durchgeführt werden.

Gemäß einem nicht beanspruchten Ausführungsbeispiel ist es möglich, das Granulat beim Auftragen mit Hilfe eines Lasers (bspw. einem Coaxiallaser) direkt aufzuvulkanisieren. Dabei wird keine lange Aufwärmstrecke benötigt und das Verfahren ist platzsparend. Dieser Prozess kann auch mit einem nicht vulkanisierten Gummi durchgeführt werden.

Bei der Verwendung eines Lasers besteht auch die Möglichkeit, das Granulat vollständig in der Mitte der Doppelstreifen zu schmelzen. Dadurch entsteht ein Streifen in der Mitte des Gummis, ähnlich wie bei einer Folie. Das Risiko eines schlechten Wischbilds durch zu große Granulatteile wird dabei reduziert. Anstelle eines Lasers kann auch ein Gasbrenner benutzt werden. Allerdings ist dabei die Temperaturstabilität nicht so konstant.

Alternativ können für die Erwärmung während des Postvulkanisationsschritts herkömmliche Verfahren wie Ofen, Salzbad und dgl. verwendet werden.

Gemäß einer alternativen, nicht beansprüchten Methode, übergroße Granulatpartikel zu eliminieren, wird vorgesehen, nach der Vulkanisierung das Granulat mechanisch auf die Oberfläche des Wischgummiprofils aufzupressen. Dies kann beispielsweise mit Hilfe aufgeheizter Andruckrollen geschehen. Diese sind vorzugsweise oberhalb und unterhalb des Wischgummiprofils vorgesehen und glätten die Granulatbeschichtung. Das Glätten der Granulatbeschichtung kann auf den mittleren Bereich des Wischgummiprofils beschränkt werden. Besonders bevorzugt ist dabei die Verwendung beheizbarer Andruckrollen, da auf diese Weise die Granulatpartikel in angeschmolzenem Zustand geglättet werden können. Um ein Ankleben des Granulats an den Andruckrollen zu vermeiden, wird deren Temperatur vorzugsweise unterhalb der Schmelztemperatur des verwendeten Granulats gehalten. Weiterhin werden vorzugsweise mehrere Andruckrollenpaare verwendet, wobei das in Laufrichtung des Gummiprofils erste Rollenpaar vorzugsweise eine höhere Temperatur aufweist als die nachfolgenden Rollenpaare. Insbesondere werden drei Rollenpaare eingesetzt. Anstatt von Andruckrollen können auch Walzen oder ähnliche mechanische Anpressvorrichtungen bzw. eine Laservorrichtung vorgesehen sein.

Mit Hilfe des erfindungsgemäßen Wischerblatts lässt sich eine sehr hohe Reibreduzierung (µ < 0,6) erzielen. Zudem kann die Verschleißbeständigkeit, d.h., die Beibehaltung einer hervorragenden Wischqualität über die Lebensdauer des Wischerblatts, deutlich erhöht werden. Weitere Vorteile liegen in der Verbesserung der Produktqualität (Geräusche, Abrieb, Lebensdauer, Wischqualität, chemische Widerstand, kein Festkleben des Wischers auf der Scheibe), der Möglichkeit der Verkettung von Extrusion, Oberflächen- und Schneidetechnik und der Online-Prüfbarkeit. Außerdem fallen bei den erfindungsgemäßen Verfahren kein freies Chlor, Brom oder Lösungsmittel an, die eine Beeinträchtigung des Arbeitsumfeldes oder Korrosion hervorrufen können. Des weiteren entsteht eine geringere Verschmutzung durch Ablösung der Oberflächenschichten und die direkten und indirekten Kosten der Oberflächenbehandlung werden reduziert. Zudem ist die Verwendung von leistungsniedrigen Elektromotoren möglich und die Erfindung ermöglicht eine größere Flexibilität bei der optischen Gestaltung der Wischerblätter.

Ein weiterer Vorteil der Erfindung besteht darin, dass das erfindungsgemäße Wischerblatt sowohl auf hydrophilen Windschutzscheiben (Klarglas) als auch auf solchen verwendet werden kann, die mit einem wasserabweisenden Mittel behandelt wurden (hydrophobe Scheiben).

## Patentansprüche

1. Wischerblatt (1) für einen Scheibenwischer, insbesondere einen Scheibenwischer eines Kraftfahrzeugs, mit einem durch Vulkanisation eines Gummimaterials erhaltenen Wischgummi (2), der eine Wischgummilippe (3) aufweist, **dadurch gekennzeichnet, dass** auf der Oberfläche der Wischgummilippe (3) eine reibmindernde Folie (4, 7) aufgeklebt ist, die einseitig mit Klebstoff versehen ist.

2. Wischerblatt nach Anspruch 1, **dadurch gekennzeichnet, dass** die Folie (4, 7) ausgewählt ist aus der Gruppe bestehend aus Ultra High Molecular Weight Polyethylene (UHMW-PE), High Molecular Polyethylene (HMW-PE), Polyethylen (PE), fluoriniertes Ethylen-Propylene (FEP), Polyphenylen-Ether (PPE), Perfluoralkoxy-Polymere (PFA), Polycarbonat (PC), Polyoxymethylen (POM), Polyacrylat (PA), Polyurethan (PUR), Polytetrafluorethylen (PTFE) und Laminate aus verschiedenen dünnen Schichten dieser Materialien.

3. Wischerblatt nach Anspruch 1, **dadurch gekennzeichnet, dass** der Klebstoff (6) auf der Folie (7) vorkonfektioniert ist.

4. Wischerblatt nach einem der Ansprüche 1 bis 2, **dadurch gekennzeichnet, dass** die Folie (4, 7) lediglich im vorderen Teil der beiden Flanken der Wischgummilippe (3) aufgebracht ist.

5. Wischerblatt nach einem der Ansprüche 1 bis 2, **dadurch gekennzeichnet, dass** die Folie (4, 7) im gesamten Bereich der Wischgummilippe (3) aufgebracht ist.

6. Wischerblatt nach einem der vorstehenden Ansprüche, **dadurch gekennzeichnet, dass** der Wischgummi (2) aus einem Material besteht, das ausgewählt ist aus der Gruppe bestehend aus Ethylen-Propylen-Dien-Monomer (EPDM), Ethylen-Propylen-Monomer (EPM) und Chloropren/Naturkautschuk (CR/NR).

7. Verfahren zur Herstellung eines Wischerblattes (1) für einen Scheibenwischer, insbesondere einen Scheibenwischer eines Kraftfahrzeugs nach einem der Ansprüche 1 bis 6, mit einem Wischgummi (2), der eine Wischgummilippe (3) aufweist, wobei der Wischgummi (2) durch Vulkanisation eines geformten synthetischen Kautschuks gebildet wird, **dadurch gekennzeichnet, dass** nach der Vulkanisation eine einseitig mit Klebstoff versehene veibminderuch Folie (4, 7) auf die Wischgummilippe (3) aufgebracht wird.

8. Verfahren nach Anspruch 7, **dadurch gekennzeichnet, dass** die Folie (7) als selbstklebende Folie aufgebracht wird.

## Claims

1. Wiper blade (1) for a windscreen wiper, in particular a windscreen wiper of a motor vehicle, with a wiper rubber (2) which has been obtained via vulcanization of a rubber material and which has a wiper rubber lip (3), **characterized in that** a friction-reducing foil (4, 7) provided with adhesive on one side has been adhesively bonded on the surface of the wiper rubber lip (3).

2. Wiper blade according to Claim 1, **characterized in that** the foil (4, 7) has been selected from the group consisting of ultra-high molecular weight polyethylenes (UHMWPE), high molecular weight polyethylenes (HMWPE), polyethylene (PE), fluorinated ethylene-propylenes (FEP), polyphenylene ethers (PPE), perfluoroalkoxy polymers (PFA), polycarbonate (PC), polyoxymethylene (POM), polyacrylate (PA), polyurethane (PU), polytetrafluoroethylene (PTFE) and laminates made of various thin layers of these materials.

3. Wiper blade according to Claim 1, **characterized in that** the adhesive (6) on the foil (7) is the result of a previous process.

4. Wiper blade according to any of Claims 1 to 2, **characterized in that** the foil (4, 7) has been applied only in the frontal portion of the two sides of the wiper rubber lip (3).

5. Wiper blade according to any of Claims 1 to 2, **characterized in that** the foil (4, 7) has been applied within the entire region of the wiper rubber lip (3).

6. Wiper blade according to any of the preceding claims, **characterized in that** the wiper rubber (2) is composed of a material selected from the group consisting of ethylene-propylene-diene monomer (EPDM), ethylene-propylene monomer (EPM) and chloroprene/natural rubber (CR/NR).

7. Process for producing a wiper blade (1) for a windscreen wiper, in particular a windscreen wiper of a motor vehicle, according to any of Claims 1 to 6, with a wiper rubber (2) which has a wiper rubber lip (3), where the wiper rubber (2) is formed via vulcanization of a moulded synthetic rubber, **characterized in that** after the vulcanisation process a friction-reducing foil (4, 7) provided on one side with adhesive is applied to the wiper rubber lip (3).

8. Process according to Claim 7, **characterized in that** the foil (7) applied takes the form of self-adhesive foil.

## Revendications

1. Lame (1) pour essuie-glace, en particulier pour essuie-glace de véhicule automobile, présentant un caoutchouc (2) de lame obtenu par vulcanisation d'un matériau de caoutchouc et dotée d'une lèvre (3) en caoutchouc de lame,
**caractérisée en ce que**
un film (4, 7) diminuant le frottement et doté d'un adhésif sur une face est collé sur la surface de la lèvre (3) en caoutchouc de la lame.

2. Lame pour essuie-glace selon la revendication 1, **caractérisée en ce que** le film (4, 7) est sélectionné dans l'ensemble constitué du polyéthylène à poids moléculaire ultra-élevé (UHMW-PE), du polyéthylène à haut poids moléculaire (HMW-PE), du polyéthylène (PE), de l'éthylène-propylène fluoré (FEP), du poly(éther de phénylène) (PPE), de polymères perfluoroalkylés (PFA), du polycarbonate (PC), du polyoxyméthylène (POM), du polyacrylate (PA), du polyuréthane (PUR), du polytétrafluoroéthylène (PTFE) et de stratifiés de différentes couches minces de ces matériaux.

3. Lame pour essuie-glace selon la revendication 1, **caractérisée en ce que** l'adhésif (6) est pré-enduit sur le film (7).

4. Lame pour essuie-glace selon l'une des revendications 1 et 2, **caractérisée en ce que** le film (4, 7) n'est appliqué que dans la partie avant des deux flancs de la lèvre (3) en caoutchouc de la lame.

5. Lame pour essuie-glace selon l'une des revendications 1 et 2, **caractérisée en ce que** le film (4, 7) est appliqué sur la totalité de la lèvre (3) en caoutchouc de la lame.

6. Lame pour essuie-glace selon l'une des revendications précédentes, **caractérisée en ce que** le caoutchouc (2) de la lame est constitué d'un matériau sélectionné dans l'ensemble constitué des monomères d'éthylène, propylène et diène (EPDM), des monomères d'éthylène et de propylène (EPM) et du caoutchouc au chloroprène-caoutchouc naturel (CR/NR).

7. Procédé de fabrication d'une lame (1) pour essuie-glace, en particulier pour essuie-glace de véhicule automobile, selon l'une des revendications 1 à 6, dotée d'un caoutchouc (2) de lame qui présente une lèvre (3) en caoutchouc de lame, le caoutchouc (2) de lame étant formé par vulcanisation d'un caoutchouc synthétique façonné,
**caractérisé en ce que**
après la vulcanisation, un film (4, 7) diminuant le frottement et dont une face est dotée d'un adhésif est appliqué sur la lèvre (3) en caoutchouc de la lame.

8. Procédé selon la revendication 7, **caractérisé en ce que** le film (7) est appliqué sous la forme d'un film autocollant.
